# EUROPEAN PATENT APPLICATION

(11) **EP 4 756 286 A1**
(43) Date of publication of application: **10.06.2026**
(21) Application number: 24847703.6
(22) Date of filing: 14.05.2024
(51) Int. Cl.: F21V 8/00, F21V 19/00, F21S 41/24, B60Q 3/66

(54) **AMBIENT LAMP AND CONTROL METHOD THEREFOR, AND VEHICLE**

(30) Priority: 31.07.2023 CN 202310956958
(71) Applicant: Zhejiang Geely Holding Group Co., Ltd, Hangzhou City, Zhejiang 310051 (CN); Geely Automobile Research Institute (Ningbo) Co., Ltd., Ningbo, Zhejiang 315336 (CN)
(72) Inventor: CHEN, Jiao, Hangzhou, Zhejiang 310051 (CN); ZHANG, Liangliang, Hangzhou, Zhejiang 310051 (CN)
(74) Representative: Elzaburu S.L.P.
(86) International application number: PCT/CN2024/092962
(87) International publication number: WO 2025/025738

(57) **Abstract**

An ambient lamp and a control method therefor, and a vehicle are disclosed. The ambient lamp comprises a first light source (1), a second light source (2), a third light source (3) and a light-guide member (4), wherein the light-guide member (4) is separately located on light-emitting paths of the first light source (1), the second light source (2) and the third light source (3), and light emitted by the first light source (1), the second light source (2) and the third light source (3) is configured to be combined in the light-guide member (4) so as to present a variety of light-emitting effects. By means of providing the light-guide member (4) on the light-emitting path of each of the first light source (1), the second light source (2) and the third light source (3), a combined light-emitting effect can be achieved.

## Description

### Technical Field

The present invention relates to the technical field of vehicles, and more particularly, to an ambient lamp and a control method therefor, and a vehicle.

### Background Art

The interior ambient lamp is a decorative lighting lamp, which can make the carriage more colorful in the night, play the role of drying atmosphere, creating the interior mood and improving the whole vehicle grade.

Most of the existing ambient lamps are in the form of multi-color ambient lamps, which emit light in a single color, or in the form of running water ambient lamps or matrix ambient lamps, which can emit light in a variety of colors and forms, but have a high cost.

### Summary of the Invention

The problem to be solved by the present invention is how to achieve a variety of ambient lamp effects at a lower cost.

In order to solve the above problems, the present invention provides an ambient lamp and a control method therefor, and a vehicle.

In a first aspect, the present invention provides an ambient lamp including a first light source, a second light source, a third light source and a light-guide member, wherein the light-guide member is separately located on light-emitting paths of the first light source, the second light source and the third light source, and light emitted by the first light source, the second light source and the third light source is configured to be combined in the light-guide member so as to present a variety of light-emitting effects in the light-guide member.

Alternatively, the light-guide member includes a first connection region, a second connection region, a third connection region, and a combination region, wherein the first connection region is located on a light-emitting path of the first light source, the second connection region is located on a light-emitting path of the second light source, the third connection region is located on a light-emitting path of the third light source, and the combination region is located on a light-emitting path of at least two of the first light source, the second light source, and the third light source.

Alternatively, the combination region includes a first combination region, a second combination region, a third combination region and a fourth combination region, the first combination region is located on a light-emitting path of the first light source and the second light source, the second combination region is located on a light-emitting path of the first light source and the third light source, the third combination region is located on a light-emitting path of the second light source and the third light source, and the fourth combination region is located on a light-emitting path of the first light source, the second light source and the third light source.

Alternatively, the light-guide member has a triangle-like shape, and the first light source, the second light source and the third light source are separately located at three top corners of the triangle-like shape.

In a second aspect, the present invention provides a control method of an ambient lamp, applied to the above mentioned ambient lamp, including:
controlling the light-emitting modes of the first light source, the second light source and the third light source so as to present a variety of light-emitting effects in the light-guide member.

Alternatively, the controlling a light-emitting mode of the first light source, the second light source and the third light source includes:
controlling any one of the first light source, the second light source and the third light source to be lighted up;
wherein, when the first light source is lighted up, a light-emitting effect of gradually changing brightness from the first connection region to the second connection region and the third connection region is presented in the light-guide member;
wherein, when the second light source is lighted up, a light-emitting effect of gradually changing brightness from the second connection region to the first connection region and the third connection region is presented in the light-guide member;
wherein, when the third light source is lighted up, a light-emitting effect of gradually changing brightness from the third connection region to the first connection region and the second connection region is presented in the light-guide member.

Alternatively, the controlling a light-emitting mode of the first light source, the second light source and the third light source includes:
controlling any two of the first light source, the second light source and the third light source to be lighted up or all light sources to be lighted up at the same time;
wherein, when the first light source and the second light source are lighted up, a light-emitting effect of gradually changing brightness from a first connection region and a second connection region to a third connection region is presented in the light-guide member;
wherein, when the first light source and the third light source are lighted up, a light-emitting effect of gradually changing brightness from a first connection region and a third connection region to a second connection region is presented in the light-guide member;
wherein, when the second light source and the third light source are lighted up, a light-emitting effect of gradually changing brightness from the second connection region and the third connection region to the first connection region is presented in the light-guide member;
wherein, when the first light source, the second light source and the third light source are lighted up at the same time, a combined light-emitting effect is present in a combination region of the light-guide member.

Alternatively, the controlling a light-emitting mode of the first light source, the second light source and the third light source includes:
controlling the first light source, the second light source and the third light source to be lighted up sequentially according to a pre-set mode.

Alternatively, the controlling a light-emitting mode of the first light source, the second light source and the third light source includes:
controlling a light-emitting color of a lighted one of the first light source, the second light source, and the third light source.

In a third aspect, the present invention provides a vehicle including the above-described ambient lamp, or a memory, a processor and a computer program stored in the memory and executable on the processor, which when executed by the processor implements the control method of the ambient lamp as described above.

The present invention can realize a combined light-emitting effect of a first light source and a second light source, a combined light-emitting effect of a first light source and a third light source, a combined light-emitting effect of a second light source and a third light source, and a combined light-emitting effect of a first light source, a second light source and a third light source by providing a light-guide member on a light-emitting path of the first light source, the second light source and the third light source at the same time, and thus can achieve a variety of ambient lamp effects. In addition, since only three light sources are required to achieve a variety of ambient lamp effects, the cost is lower compared to the prior art.

### Brief Description of the Drawings

Fig. 1 is a schematic view showing a structure of an ambient lamp according to an embodiment of the present invention;
Fig. 2 is a schematic view showing a detailed structure of an ambient lamp according to an embodiment of the present invention;
Fig. 3 is a schematic view showing that the first light source emits light alone according to an embodiment of the present invention;
Fig. 4 is a schematic view showing light emission from a combination of a second light source and a third light source according to an embodiment of the present invention;
Fig. 5 is a schematic view showing that the first light source, the second light source, and the third light source all emit light according to an embodiment of the present invention;
Fig. 6 is an enlarged block schematic view of an ambient lamp according to an embodiment of the present invention;
Fig. 7 is a schematic cross-sectional view along A-A of Fig. 6.

### DESCRIPTION OF REFERENCE NUMERALS:

1-first light source, 2-second light source, 3-third light source, 4-light-guide member, 41-first connection region, 42-second connection region, 43-third connection region, 44-combination region, 441-first combination region, 442-second combination region, 443-third combination region, 444-fourth combination region, 45-reflected light point, 46-light-guide plate.

### Detailed Description of the Invention

In order to make the above objectives, features, and advantages of the present invention more obvious and understandable, specific embodiments of the present invention will be described in detail below in conjunction with the accompanying drawings.

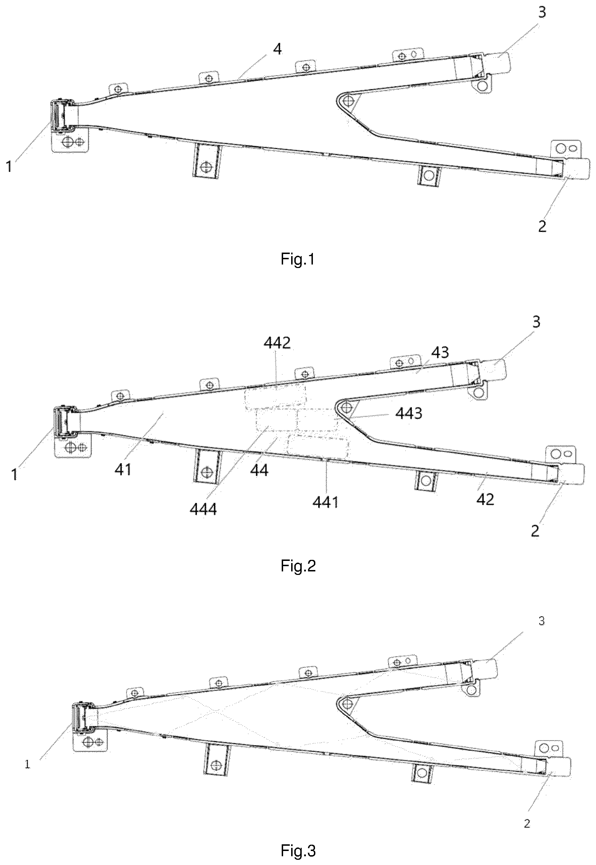

As shown in Fig. 1, an embodiment of the present invention provides an ambient lamp, including a first light source 1, a second light source 2, a third light source 3 and a light-guide member 4, wherein the light-guide member 4 is separately located on the light-emitting paths of the first light source 1, the second light source 2 and the third light source 3, and the light emitted by the first light source 1, the second light source 2 and the third light source 3 is configured to be combined in the light-guide member 4 so as to present a variety of light-emitting effects in the light-guide member 4.

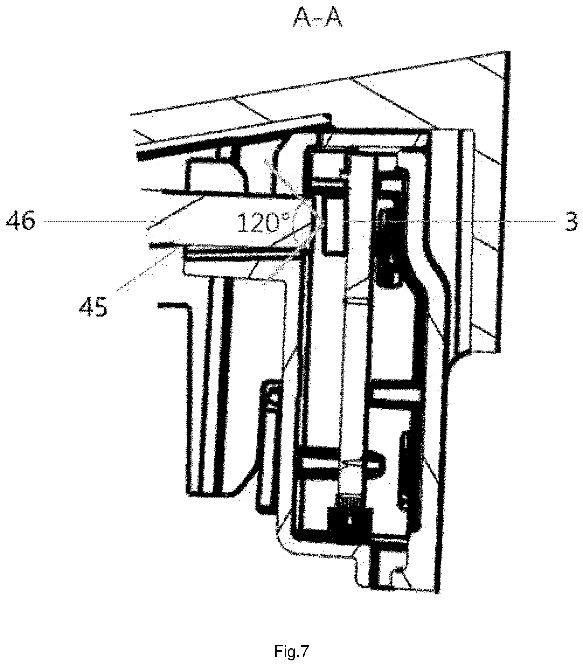

Specifically, the ambient lamp includes a first light source 1, a second light source 2, a third light source 3 and a light-guide member 4, wherein the light-guide member 4 is located on a light-emitting path of the first light source 1, the second light source 2 and the third light source 3, that is to say, light emitted by the first light source 1, the second light source 2 and the third light source 3 can be reflected in the light-guide member 4 (for example, being reflected by a light-guide plate 46 as shown in Fig. 7), etc., for example, when the light-emitting angle of the first light source 1 is 120 °, depending on multiple reflections of light rays by the light-guide member 4, multiple light-emitting effects can be presented in the light-guide member 4. For example, a combined light-emitting effect of the first light source 1 and the second light source 2, a combined light-emitting effect of the first light source 1 and the third light source 3, a combined light-emitting effect of the second light source 2 and the third light source 3, and a combined light-emitting effect of the first light source 1, the second light source 2, and the third light source 3.

Herein, "combined" means that when two types of light ray are mixed together, they are superimposed on each other to form a spectral range covering all wavelengths of the two types of light, so that the combined light will generally exhibit a new color.

Alternatively, the light-guide member 4 includes a first connection region 41, a second connection region 42, a third connection region 43 and a combination region 44, wherein the first connection region 41 is located on a light-emitting path of the first light source 1, the second connection region 42 is located on a light-emitting path of the second light source 2, the third connection region 43 is located on a light-emitting path of the third light source 3, and the combination region 44 is located on a light-emitting path of at least two of the first light source 1, the second light source 2, and the third light source 3.

Specifically, in conjunction with the illustration in Fig. 2, the light-guide member 4 includes a first connection region 41, a second connection region 42, a third connection region 43 and a combination region 44, wherein the first connection region 41 is located on the light-emitting path of the first light source 1, light emitted by the first light source 1 enters the combination region 44 via the first connection region 41, the second connection region 42 is located on the light-emitting path of the second light source 2, light emitted by the second light source 2 enters the combination region 44 via the second connection region 42, the third connection region 43 is located on the light-emitting path of the third light source 3, and light emitted by the third light source 3 enters the combination region 44 via the third connection region 43. Light emitted by the first light source 1, the second light source 2 and the third light source 3 is combined in the combination region 44 in pairs and the three are combined to achieve a variety of ambient lamp effects.

Alternatively, the combination region 44 includes a first combination region 441, a second combination region 442, a third combination region 443, and a fourth combination region 444, the first combination region 441 is located on a light-emitting path of the first light source 1 and the second light source 2, and the second combination region 442 is located on a light-emitting path of the first light source 1 and the third light source 3, the third combination region 443 is located on a light-emitting path of the second light source 2 and the third light source 3, and the fourth combination region 444 is located on a light-emitting path of the first light source 1, the second light source 2 and the third light source 3.

Specifically, the combination region 44 includes a first combination region 441, a second combination region 442, a third combination region 443 and a fourth combination region 444; the first combination region 441 is located on a light-emitting path of the first light source 1 and the second light source 2, light emitted from the first light source 1 and the second light source 2 is combined in the first combination region 441; the second combination region 442 is located on a light-emitting path of the first light source 1 and the third light source 3, and light emitted from the first light source 1 and the third light source 3 is combined in the second combination region 442; the third combination region 443 is located on the light-emitting paths of the second light source 2 and the third light source 3, light emitted by the second light source 2 and the third light source 3 is combined in the third combination region 443; the fourth combination region 444 is located on the light-emitting paths of the first light source 1, the second light source 2 and the third light source 3, and light emitted by the first light source 1, the second light source 2 and the third light source 3 is combined in the fourth combination region 444.

For example, the first light source 1 emits red light, the first connection region 41 presents red light, the second light source 2 emits blue light, the second connection region 42 presents blue light, the third light source 3 emits green light, the third connection region 43 presents green light, the first combination region 441 (the first light source 1 and the second light source 2 emit light in combination) presents violet light, the second combination region 442 (the first light source 1 and the third light source 3 emit light in combination) presents yellow light, the third combination region 443 (the second light source 2 and the third light source 3 emit light in combination) presents cyan light, and the fourth combination region 444 (the first light source 1, the second light source 2 and the third light source 3 emit light in combination) presents white light, and thus finally present light of seven colors, namely red light, blue light, green light, violet light, yellow light, cyan light and white light.

Here, in Fig. 2, the distribution of the first combination region 441, the second combination region 442, the third combination region 443, and the fourth combination region 444 is illustrated by way of example only, and in practical cases, the light of the mixed color is diffused without a distinct boundary.

Alternatively, the light-guide member 4 has a triangle-like shape, and the first light source 1, the second light source 2 and the third light source 3 are separately located at three top corners of the triangle-like shape.

Specifically, the light-guide member 4 as a whole has a shape similar to a triangle, and the first light source 1, the second light source 2 and the third light source 3 are separately located at three corners of the triangle; according to the existing solution, for such a shape similar to a triangle, multiple LED need to be arranged in each region of the light-guide member 4 to achieve uniform light-emitting; however, in the present embodiment, only three light sources need to be arranged at three top corner positions to uniformly illuminate the whole light-exiting surface, which can reduce the overall cost while saving the structure space; in addition, if the three light sources separately emit light of different colors. According to the pair-by-pair combination between the light sources (three cases) and the combination of the three sources, plus the light emitted by the three light sources alone, up to seven light-emitting colors can be presented, so that a variety of ambient lamp effects can be achieved.

Wherein a connecting line of the first light source 1 and the second light source 2 corresponds to the longest side of the triangle, a connecting line of the first light source 1 and the third light source 3 corresponds to a middle-length side of the triangle, and a connecting line of the second light source 2 and the third light source 3 corresponds to the shortest side of the triangle; as shown in conjunction with Figs. 1 to 6, the shortest side of the triangle corresponding to the connecting line between the second light source 2 and the third light source 3 does not have a solid structure, but a part of the triangle is vacant, so that materials can be saved without affecting the optical path propagation.

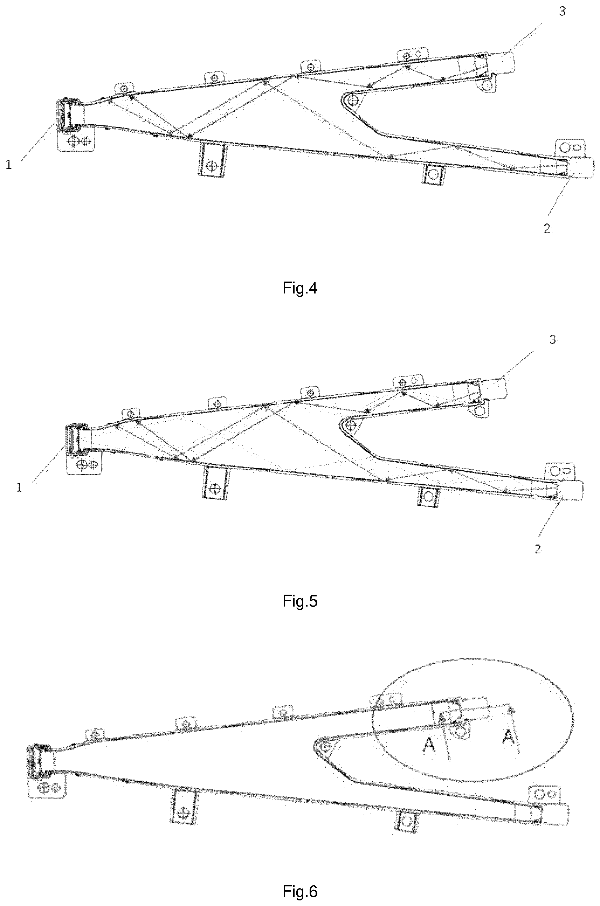

As shown in Figs. 6 and 7, the bottom of the light-guide member 4 (indicating the back surface of the light-exiting surface) is provided with a reflected light point 45, and the light in the light-guide member 4 is emitted via the reflected light point 45, so that an observer located on the front surface or the side surface of the light-guide member 4 can see a variety of ambient lamp effects of the light-guide member 4.

Wherein the reflected light points 45 can be distributed on the bottom of the light-guide member 4 according to a lattice.

Another embodiment of the present invention provides a control method of an ambient lamp, applied to the above mentioned ambient lamp, including:
controlling the light-emitting modes of the first light source 1, the second light source 2 and the third light source 3 so as to present a variety of light-emitting effects in the light-guide member 4.

Specifically, by controlling the light-emitting modes of the first light source 1, the second light source 2, and the third light source 3, a variety of light-emitting effects can be exhibited in the light-guide member 4, and the light-emitting modes can be roughly classified into a constant light and a flickering, and a light-emitting color.

Alternatively, the controlling the light-emitting modes of the first light source 1, the second light source 2, and the third light source 3 includes:
controlling any one of the first light source 1, the second light source 2 and the third light source 3 to be lighted up;

Specifically, in the constant light mode, any one of the first light source 1, the second light source 2, and the third light source 3 can be lighted to achieve a light-emitting effect of gradually changing brightness.

Wherein, when the first light source 1 is lighted up, a light-emitting effect of gradually changing brightness from the first connection region 41 to the second connection region 42 and the third connection region 43 is presented in the light-guide member 4.

Specifically, in conjunction with the illustration in Fig. 3, when the first light source 1 is lighted up, a light-emitting effect of gradually changing brightness from the first connection region 41 to the second connection region 42 and the third connection region 43 is presented in the light-guide member 4, namely, the brightness of the first light source 1-the first connection region 41-the combination region (emitting light without combination)-the second connection region 42 and the third connection region 43 gradually decreases.

Wherein, when the second light source 2 is lighted up, the light-guide member 4 exhibits a light-emitting effect of gradually changing brightness from the second connection region 42 to the first connection region 41 and the third connection region 43.

Specifically, when the second light source 2 is lighted up, a light-emitting effect of gradually changing brightness from the second connection region 42 to the first connection region 41 and the third connection region 43 is presented in the light-guide member 4, namely, the brightness of the second light source 2-the second connection region 42-a combination region (emitting light without combination)-the first connection region 41 and the third connection region 43 gradually decreases.
wherein, when the third light source 3 is lighted up, a light-emitting effect of gradually changing brightness from the third connection region 43 to the first connection region 41 and the second connection region 42 is presented in the light-guide member 4.

Specifically, when the third light source 3 is lighted up, a light-emitting effect of gradually changing brightness from the third connection region 43 to the first connection region 41 and the second connection region 42 is presented in the light-guide member 4, namely, the brightness of the third light source 3-the third connection region 43-a combination region (emitting light without combination)-the first connection region 41 and the second connection region 42 gradually decreases.

Alternatively, the controlling the light-emitting modes of the first light source 1, the second light source 2, and the third light source 3 includes:
controlling any two of the first light source 1, the second light source 2 and the third light source 3 to be lighted up or all light sources to be lighted up at the same time.

Specifically, in the constant light mode, any two of the first light source 1, the second light source 2, and the third light source 3 may be lighted to achieve a light-emitting effect of gradually changing brightness.

Wherein, when the first light source 1 and the second light source 2 are lighted up, a light-emitting effect of gradually changing brightness from a first connection region 41 and a second connection region 42 to a third connection region 43 is presented in the light-guide member 4.

Specifically, when the first light source 1 and the second light source 2 are lighted up, a light-emitting effect of gradually changing brightness from the first connection region 41 and the second connection region 42 to the third connection region 43 is presented in the light-guide member 4, namely, the propagation direction of light rays is: a first light source 1-a first connection region 41-a combination region-a third connection region 43, and a second light source 2-a second connection region 42-a combination region-a third connection region 43, in the combination region, there is a certain degree of combination of light emitted by the first light source 1 and the second light source 2.

Wherein, when the first light source 1 and the third light source 3 are lighted up, a light-emitting effect of gradually changing brightness from the first connection region 41 and the third connection region 43 to the second connection region 42 is presented in the light-guide member 4.

Specifically, when the first light source 1 and the third light source 3 are lighted up, a light-emitting effect of gradually changing brightness from the first connection region 41 and the third connection region 43 to the second connection region 42 is presented in the light-guide member 4, namely, the propagation direction of light rays is: a first light source 1-a first connection region 41-a combination region-a second connection region 42, and a third light source 3-a third connection region 43-a combination region-a second connection region 42, in the combination region, there is a certain degree of combination of light emitted by the first light source 1 and the third light source 3.

And when the second light source 2 and the third light source 3 are lighted up, a light-emitting effect of gradually changing brightness from the second connection region 42 and the third connection region 43 to the first connection region 41 is presented in the light-guide member 4.

Specifically, in conjunction with Fig. 4, when the second light source 2 and the third light source 3 are lighted up, a light-emitting effect of gradually changing brightness from the second connection region 42 and the third connection region 43 to the first connection region 41 is presented in the light-guide member 4, namely, the propagation direction of light rays is: A second light source 2-a second connection region 42-a combination region-a first connection region 41, and a third light source 3-a third connection region 43-a combination region-a first connection region 41, and in the combination region, there is a certain degree of combination of light emitted by the second light source 2 and the third light source 3.

Wherein, when the first light source 1, the second light source 2 and the third light source 3 are lighted up at the same time, a combined light-emitting effect is present in a combination region of the light-guide member 4.

Specifically, in conjunction with Fig. 5, when the first light source 1, the second light source 2, and the third light source 3 are lighted up, a combined light-emitting effect is present in the combination region of the light-guide member 4, and the specific light-emitting effect is described with reference to the above description and will not be described again here.

Alternatively, the controlling the light-emitting modes of the first light source 1, the second light source 2, and the third light source 3 includes:
controlling the first light source 1, the second light source 2 and the third light source 3 to be lighted up sequentially according to a pre-set mode.

Specifically, by controlling the first light source 1, the second light source 2 and the third light source 3 to be lighted up sequentially at different times, a flashing light-emitting effect can be presented, for example, according to a clockwise light-up sequence of the first light source 1, the third light source 3 and the second light source 2, or according to a counterclockwise light-up sequence of the first light source 1, the second light source 2 and the third light source 3; it is also possible to turn on and off any of the light sources in a slow mode, so as to achieve the light-emitting effect of the breathing lamp.

Alternatively, the controlling the light-emitting modes of the first light source 1, the second light source 2, and the third light source 3 includes:
controlling a light-emitting color of a lighted one of the first light source 1, the second light source 2, and the third light source 3.

Specifically, the light-emitting color of the light source that has been lighted up can be controlled, and is specifically divided into:
(1) when any one of the first light source 1, the second light source 2, and the third light source 3 is lighted up, by changing the light-emitting color of the lighted light source, light-emitting effects of different colors of the single light source are achieved;
(2) when any two of the first light source 1, the second light source 2, and the third light source 3 are lighted up, by changing the light-emitting color of the lighted light sources, light-emitting effects of different colors of the two light sources are realized, and the light-emitting color of a partial region within the combination region is changed;
(3) when all of the first light source 1, the second light source 2 and the third light source 3 are lighted, a light-emitting effect such as convection can be achieved by changing the lighting colour of the lighted light sources, for example, the first light source 1 emits red light, the second light source 2 and the third light source 3 emit green light, and a change effect of convection of two colors can be formed;
(4) When the first light source 1, the second light source 2 and the third light source 3 are controlled to sequentially light up at different times, light emission can be performed according to different light-emitting colour sequences, for example, red light, green light and yellow light are sequentially emitted in one light-emitting period of the first light source 1, blue light, red light and violet light are sequentially emitted in one light-emitting period of the second light source 2, and violet light, blue light and red light are sequentially emitted in one light-emitting period of the third light source 3, according to the light-emitting sequence of the first light source 1-the second light source 2-the third light source 3, the light-emitting effect of red light-blue light-violet light-green light-red light-blue light-yellow light-violet light-red light can be presented.

Another embodiment of the present invention provides a vehicle including the above-described ambient lamp, or a memory, a processor, and a computer program stored in the memory and operable on the processor, which when executed implements the control method of the ambient lamp as described above.

Although the present invention has been described above, the scope of protection of the present invention is not limited thereto. It will be apparent to those skilled in the art that various modifications and variations can be made in the present invention without departing from the spirit or scope of the inventions, which fall within the scope of the appended claims.

## Claims

1. An ambient lamp **characterized by** comprising a first light source (1), a second light source (2), a third light source (3) and a light-guide member (4), wherein the light-guide member (4) is separately located on light-emitting paths of the first light source (1), the second light source (2) and the third light source (3), light emitted by the first light source (1), the second light source (2) and the third light source (3) is configured to be combined in the light-guide member (4) so as to present a variety of light-emitting effects in the light-guide member (4).

2. The ambient lamp according to claim 1, **characterized in that** the light-guide member (4) comprises a first connection region (41), a second connection region (42), a third connection region (43) and a combination region (44), wherein the first connection region (41) is located on a light-emitting path of the first light source (1), the second connection region (42) is located on a light-emitting path of the second light source (2), the third connection region (43) is located on a light-emitting path of the third light source (3), and the combination region (44) is located on the light-emitting path of at least two of the first light source (1), the second light source (2) and the third light source (3).

3. The ambient lamp according to claim 2, **characterized in that** the combination region (44) comprises a first combination region (441), a second combination region (442), a third combination region (443), and a fourth combination region (444), the first combination region (441) is located on a light-emitting path of the first light source (1) and the second light source (2), and the second combination region (442) is located on a light-emitting path of the first light source (1) and the third light source (3), the third combination region (443) is located on a light-emitting path of the second light source (2) and the third light source (3), and the fourth combination region (444) is located on a light-emitting path of the first light source (1), the second light source (2) and the third light source (3).

4. The ambient lamp according to claim 1, **characterized in that** the light-guide member (4) has a triangle-like shape, and the first light source (1), the second light source (2), and the third light source (3) are separately located at three top corners of the triangle-like shape.

5. A control method of an ambient lamp, applied to the ambient lamp according to any one of claims 1 to 4, **characterized by** comprising:
controlling the light-emitting modes of the first light source (1), the second light source (2) and the third light source (3) so as to present a variety of light-emitting effects in the light-guide member (4).

6. The control method of the ambient lamp according to claim 5, **characterized in that** the controlling the light-emitting modes of the first light source (1), the second light source (2) and the third light source (3) comprises:
controlling any one of the first light source (1), the second light source (2) and the third light source (3) to be lighted up;
wherein, when the first light source (1) is lighted up, a light-emitting effect of gradually changing brightness from the first connection region (41) to the second connection region (42) and the third connection region (43) is presented in the light-guide member (4);
wherein, when the second light source (2) is lighted up, a light-emitting effect of gradually changing brightness from the second connection region (42) to the first connection region (41) and the third connection region (43) is presented in the light-guide member (4);
wherein, when the third light source (3) is lighted up, a light-emitting effect of gradually changing brightness from the third connection region (43) to the first connection region (41) and the second connection region (42) is presented in the light-guide member (4).

7. The control method of the ambient lamp according to claim 5, **characterized in that** the controlling the light-emitting modes of the first light source (1), the second light source (2) and the third light source (3) comprises:
controlling any two of the first light source (1), the second light source (2) and the third light source (3) to be lighted up or all light sources to be lighted up at the same time;
wherein, when the first light source (1) and the second light source (2) are lighted up, a light-emitting effect of gradually changing brightness from a first connection region (41) and a second connection region (42) to a third connection region (43) is presented in the light-guide member (4);
wherein, when the first light source (1) and the third light source (3) are lighted up, a light-emitting effect of gradually changing brightness from a first connection region (41) and a third connection region (43) to a second connection region (42) is presented in the light-guide member (4);
wherein, when the second light source (2) and the third light source (3) are lighted up, a light-emitting effect of gradually changing brightness from the second connection region (42) and the third connection region (43) to the first connection region (41) is presented in the light-guide member (4);
wherein, when the first light source (1), the second light source (2) and the third light source (3) are lighted up at the same time, a combined light-emitting effect is present in a combination region of the light-guide member (4).

8. The control method of the ambient lamp according to claim 5, **characterized in that** the controlling the light-emitting modes of the first light source (1), the second light source (2) and the third light source (3) comprises:
controlling the first light source (1), the second light source (2) and the third light source (3) to be lighted up sequentially according to a pre-set mode.

9. The control method of the ambient lamp according to any one of claims 5 to 8, **characterized in that** the controlling the light-emitting modes of the first light source (1), the second light source (2) and the third light source (3) comprises:
controlling a light-emitting color of a lighted one of the first light source (1), the second light source (2), and the third light source (3).

10. A vehicle, **characterized by** comprising the ambient lamp according to any one of claims 1 to 4, or a memory, a processor and a computer program stored in the memory and executable on the processor, which when executed by the processor implements the control method of the ambient lamp according to any one of claims 5 to 9.
